# EUROPEAN PATENT APPLICATION

(11) **EP 4 560 372 A1**
(43) Date of publication of application: **28.05.2025**
(21) Application number: 24214121.6
(22) Date of filing: 20.11.2024
(51) Int. Cl.: G02B 6/44, H05K 7/18, G02B 6/38

(54) **PATCH FIELD MOUNTING BRACKET SYSTEM**

(30) Priority: 22.11.2023 US 202363601823 P
(71) Applicant: Legrand DPC, LLC, West Hartford CT 06110 (US)
(72) Inventor: LARSEN, Lars R., Morrisville, NC 27560 (US); VACCA, Chris, Westerly, RI 02891 (US); SMITH, Daniel M., Westerly, RI 02891 (US)
(74) Representative: Studio Torta S.p.A.

(57) **Abstract**

An example patch field mounting bracket is provided. The patch field mounting bracket includes a main body section defining a length between opposing top and bottom edges, and defining a width between opposing first and second side edges. The patch field mounting includes a first mounting flange extending from the first side edge of the main body section. The patch field mounting bracket includes a second mounting flange extending from the second side edge of the main body section. The patch field mounting bracket includes openings formed in the main body section and configured to receive at least one optical fiber or a fiber adapter.

## Description

### BACKGROUND

Media patching systems for copper and/or fiber patch cords of the telecommunications industry are typically stored in racks (e.g., cabinets). The interior of the rack defines a "U" space with industry dimensions for mounting and arraying of both active and passive connectivity equipment. The racks are typically positioned adjacent to each other, and traditionally can include vertical cable managers on the sides and/or in-between the racks to assist with cable routing and cable management. The fiber patch field is generally hosted in enclosures within the rack, either on top of the rack above the active equipment, or within adjacent racks. This layout requires substantially long patch cords of variable length, and complex cable routing.

Improvements in fiber optic technology include development of very small form factor (VSFF) fiber connection solutions (such as MDC, SN, AIM, or the like), which enable meaningful numbers of fiber patch field interconnects to be hosted outside of the traditional "U" space and into the area presently occupied by vertical managers. If optical fibers are placed in the area between the racks, the need for vertical management is eliminated, and patch cords in general become much shorter and more consistent in length, as the fiber patch field would be directly adjacent to the active fiber equipment in the rack.

### SUMMARY

Embodiments of the present disclosure provide a system of patch field mounting brackets configured to be coupled either to rails of adjacent racks, or between the rail of a rack and the adjacent cabinet wall (in instances where the rack is at the end of a row). Although discussed herein as receiving optical fiber adapters or panels for optical fiber adapters, in some embodiments, the brackets can be used for mounting of any type of cable and/or cable accessory. The brackets can therefore be installed between the adjacent racks to provide support for fiber patch fields. Each bracket includes a pattern of openings designed to either direct-mount fiber adapters (e.g., MDC, SN, AIM, or the like), or to mount optical fiber panels (OFPs) of varying density in the space between the rack rails (or between the rail and the cabinet wall). Fiber patch fields can support at least 48 fibers per side per rack U, and allow for support of optical fiber connections outside of the traditional "U" space within the rack. The mounting brackets effectively increase the amount of active equipment which can be supported by each rack, thereby increasing the overall amount of equipment which can be supported within a data center of a given size.

In accordance with embodiments of the present disclosure, an exemplary patch field mounting bracket is provided. The patch field mounting bracket includes a main body section defining a length between opposing top and bottom edges, and defining a width between opposing first and second side edges. The patch field mounting bracket includes a first mounting flange extending from the first side edge of the main body section. The patch field mounting bracket includes a second mounting flange extending from the second side edge of the main body section. The patch field mounting bracket includes openings formed in the main body section.

In some embodiments, the main body section can define a rectangular configuration with the top and bottom edges extending parallel to each other, and the first and second side edges extending parallel to each other. The first and second mounting flanges can extend substantially perpendicularly from the respective first and second side edges of the main body section. The first and second mounting flanges can extend substantially parallel to each other. The first and second mounting flanges include holes configured to receive a fastener therethrough for attachment of the patch field mounting bracket to a rack, cabinet wall, or another bracket.

Each of the openings formed in the main body section can be configured and dimensioned to receive at least one optical fiber adapter. The openings formed in the main body section can define a staggered and spaced pattern. In some embodiments, the staggered and spaced pattern can include back-and-forth alternating rows of offset openings. The first and second mounting flanges can be configured for detachable coupling to at least one of (i) a vertical rail of a rack, (ii) a vertical rail of a cabinet wall, or (iii) another patch field mounting bracket.

In accordance with embodiments of the present disclosure, an exemplary patch field mounting bracket system is provided. The system includes a rack including vertical rails extending between a base and a top assembly. The system includes a patch field mounting bracket. The patch field mounting bracket includes a main body section defining a length between opposing top and bottom edges, and defining a width between opposing first and second side edges. The patch field mounting bracket includes a first mounting flange extending from the first side edge of the main body section. The patch field mounting bracket includes a second mounting flange extending from the second side edge of the main body section. The patch field mounting bracket includes openings formed in the main body section.

In some embodiments, the length of the main body section of the patch field mounting bracket can be substantially equal to a length of the vertical rails of the rack. In some embodiments, the length of the main body section of the patch field mounting bracket can be dimensioned smaller than a length of the vertical rails of the rack. Each of the vertical rails includes holes for mounting of the patch field mounting bracket to the vertical rails. In some embodiments, the main body section of the patch field mounting bracket can define a rectangular configuration with the top and bottom edges extending substantially parallel to each other, and the first and second side edges extending substantially parallel to each other.

The first and second mounting flanges of the patch field mounting bracket can extend substantially perpendicularly from the respective first and second side edges of the main body section. In some embodiments, the first and second mounting flanges of the patch field mounting bracket can extend substantially parallel to each other. The first and second mounting flanges of the patch field mounting bracket include holes configured to receive a fastener therethrough for attachment of the patch field mounting bracket to the vertical rails of the rack.

Each of the openings formed in the main body section of the patch field mounting bracket can be configured and dimensioned to receive at least one optical fiber adapter. In some embodiments, the openings formed in the main body section of the patch field mounting bracket can define a staggered and spaced pattern including back-and-forth alternating rows of offset openings.

In accordance with embodiments of the present disclosure, an exemplary method of patch field mounting is provided. The method includes mounting a patch field mounting bracket to a vertical rail of a rack. The patch field mounting bracket includes a main body section defining a length between opposing top and bottom edges, and defining a width between opposing first and second side edges. The patch field mounting bracket includes a first mounting flange extending from the first side edge of the main body section. The patch field mounting bracket includes a second mounting flange extending from the second side edge of the main body section. The patch field mounting bracket includes openings formed in the main body section. The method includes engaging at least one optical fiber or a fiber adapter with one of the openings formed in the main body section. The first mounting flange or the second mounting flange of the patch field mounting bracket are configured for coupling to the vertical rail of the rack to mount the patch field mounting bracket to the vertical rail of the rack.

Any combination and/or permutation of embodiments is envisioned. Other objects and features will become apparent from the following detailed description considered in conjunction with the accompanying drawings. It is to be understood, however, that the drawings are designed as an illustration only and not as a definition of the limits of the present disclosure.

### BRIEF DESCRIPTION OF THE DRAWINGS

To assist those of skill in the art in making and using the patch field mounting bracket system, reference is made to the accompanying figures, wherein:
FIG. 1 is a perspective view of a rack in accordance with embodiments of the present disclosure.
FIG. 2 is a detailed view of a rack of FIG. 1.
FIG. 3 is a perspective view of an exemplary patch field mounting bracket in accordance with embodiments of the present disclosure.
FIG. 4 is a front view of an exemplary patch field mounting bracket of FIG. 3.
FIG. 5 is a rear view of an exemplary patch field mounting bracket of FIG. 3.
FIG. 6 is a perspective view of exemplary patch field mounting brackets of FIG. 3 connected/installed between adjacent racks and between a rack and a cabinet wall.
FIG. 7 is a detailed view of an exemplary patch field mounting bracket of FIG. 3 connected/installed to a rack.
FIG. 8 is a detailed view of an exemplary patch field mounting bracket of FIG. 3 connected/installed to a rack.
FIG. 9 is a perspective view of fiber optic adapters installed in an exemplary patch field bracket of FIG. 3.

### DETAILED DESCRIPTION

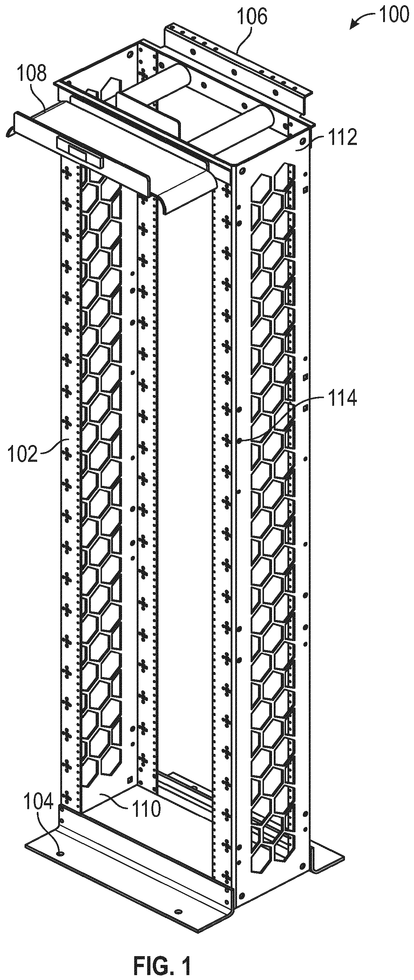

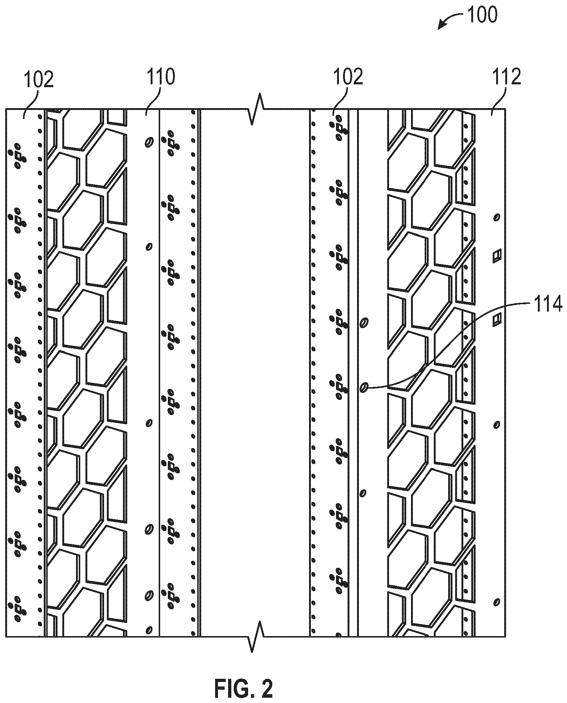

FIGS. 1-2 are perspective and detailed views of an exemplary rack 100. The rack 100 generally includes vertical rails 102 that extend the height of the rack 100 at each respective corner. The rack 100 includes a base 104 and a top assembly 106 coupled to the vertical rails 102 at opposing ends of the rack 100. The vertical rails 102, base 104 and top assembly 106 define an interior space with industry standard "U" dimensions configured to receive optical fiber equipment. In some embodiments, the top assembly 106 can include a cable management tray 108 extending beyond a front plane of the rack 100 and configured to receive cables for routing above the racks 100 in the data center.

In some embodiments, the rack 100 can include side panels 110, 112 mounted to opposing sides of the rack 100. The side panels 110, 112 can be solid or can include a pattern of openings for improved air circulation. The side panels 110, 112 include mounting holes 114 formed in a spaced manner along the height of the rack 100. The side panels 110, 112 each include two vertical rails 102. The holes 114 can be used for mounting of accessories to the side panels 110, 112 adjacent to the respective vertical rails 102, and for mounting of the exemplary mounting brackets to the rack 100, as discussed herein.

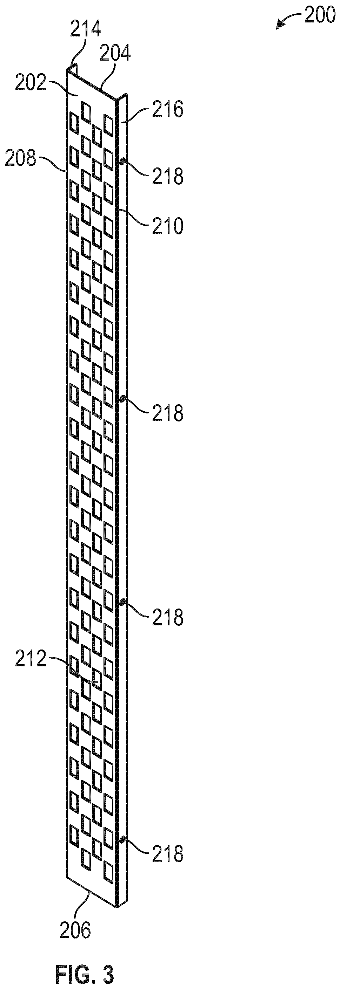

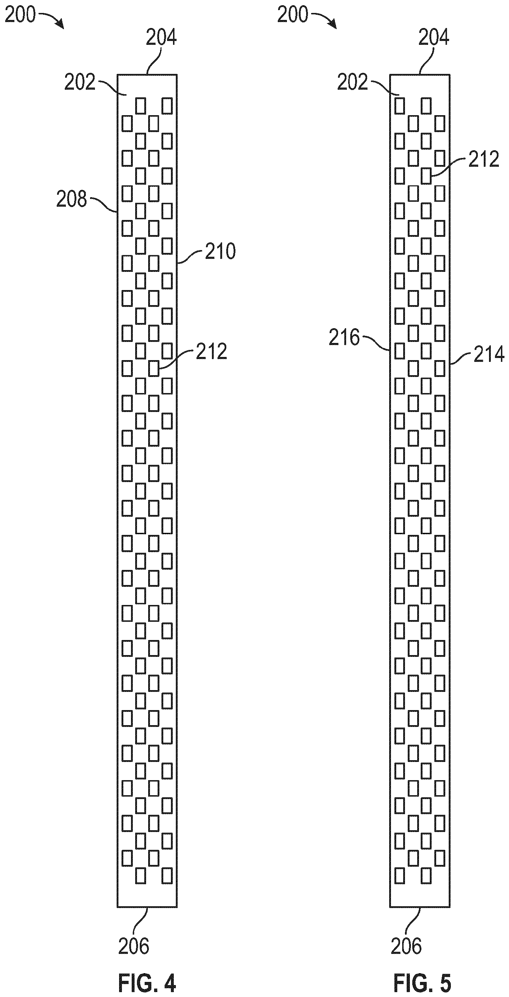

FIGS. 3-5 are perspective, front and rear views of an exemplary patch field mounting bracket 200 (hereinafter "bracket 200"). In some embodiments, the bracket 200 can be fabricated from a rigid metal or plastic material. The bracket 200 includes a substantially flat or planar main body section 202 that extends from a top edge 204 (e.g., top end) to a bottom edge 206 (e.g., bottom end). The main body section 202 defines the front or rear-facing surface of the bracket 200 when installed relative to the rack 100. The main body section 202 defines a height or length measured between the top and bottom edges 204, 206, which can be about, e.g., 6-9 feet inclusive, 6-8 feet inclusive, 6-7 feet inclusive, 7-9 feet inclusive, 8-9 feet inclusive, 6 feet, 7 feet, 8 feet, 9 feet, or the like. In some embodiments, the height of the bracket 200 can be dimensioned substantially similar to the height of the rack 100 (and/or the vertical rails 102 of the rack 100). In some embodiments, the height of the bracket 200 can be smaller than the height of the rack 100 (or the vertical rails 102 of the rack 100), thereby covering only a portion of the space between adjacent racks 100. In some embodiments, two or more brackets 200 can be stacked over each other to selectively cover at least a portion of the space between adjacent racks 100.

The main body section 202 defines a width measured between side edges 208, 210, which can be about, e.g., 4-10 inches inclusive, 4-9 inches inclusive, 4-8 inches inclusive, 4-7 inches inclusive, 4-6 inches inclusive, 4-5 inches inclusive, 5-10 inches inclusive, 6-10 inches inclusive, 7-10 inches inclusive, 8-10 inches inclusive, 9-10 inches inclusive, 5-9 inches inclusive, 6-8 inches inclusive, 4 inches, 5 inches, 6 inches, 7 inches, 8 inches, 9 inches, 10 inches, or the like. The main body section 202 defines a substantially rectangular configuration with the top and bottom edges 204, 206 extending substantially parallel to each other, and the side edges 208, 210 extending substantially parallel to each other.

The main body section 202 includes openings 212 formed in a spaced manner along most or all of the main body section 202. The openings 212 can be formed in a spaced pattern with each row including two spaced openings 212, and the adjacent rows having openings 212 offset relative to each other in a back-and-forth manner. As such, one set of rows includes openings 212 that align along respective columns, and another set of rows includes openings 212 that align along different respective columns. In the offset, repeating pattern, the space between the openings 212 provides room for labeling of optical fiber connections. In some embodiments, each row can include more than two openings 212 with the openings 212 aligned along respective columns. This pattern of openings 212 also makes it easier to identify which openings 212 correspond to specific rack "U" spaces within the rack 100 to which bracket 200 will be coupled. Each of the openings 212 can define a substantially square or rectangular configuration with a width of about, e.g., ½ inch, and a height of about, e.g., 1½ inches. Each opening 212 can be dimensioned to receive fiber optic adapters (e.g., three stacked adapters, or the like) through direct mounting, or optical fibers (e.g., about 24 fibers). However, the dimensions of the openings 212 can be selected to allow for more or less adapters of differing fiber counts and connector types.

The bracket 200 includes a first flange 214 extending substantially perpendicularly from the side edge 208, and a second flange 216 extending substantially perpendicularly from the side edge 210. In some embodiments, first flange 214 may be at an obtuse angle with respect to main body section 202, while second flange 216 may be at an acute angle to main body section 202. In other embodiments, these angular relations may be reversed. In some embodiments, the first and second flange 214, 216 can be formed by bending the material forming the main body section 202, resulting in a single structure for the main body section 202 and the flanges 214, 216. In some embodiments, the first and second flanges 214, 216 can be connected to the main body section 202 by mechanical means, e.g., welding, fasteners, or the like. The flanges 214, 216 can extend the entire height or length of the main body section 202 from the top edge 204 to the bottom edge 206. In some embodiments, the flanges 214, 216 can be dimensioned smaller than the height or length of the main body section 202. Each of the flanges 214, 216 include holes 218 formed therein and spaced along the height of the flange 214, 216. As discussed herein, the holes 218 can be used to mount the bracket 200 to the rack 100, to a cabinet wall, and/or to another bracket 200. In some embodiments, the width of the flanges 214, 216 (measured as the distance of extension from the respective side edge 208, 210) can be about, e.g., 1-4 inches inclusive, 1-3 inches inclusive, 1-2 inches inclusive, 2-4 inches inclusive, 3-4 inches inclusive, 1 inch, 2 inches, 3 inches, 4 inches, or the like.

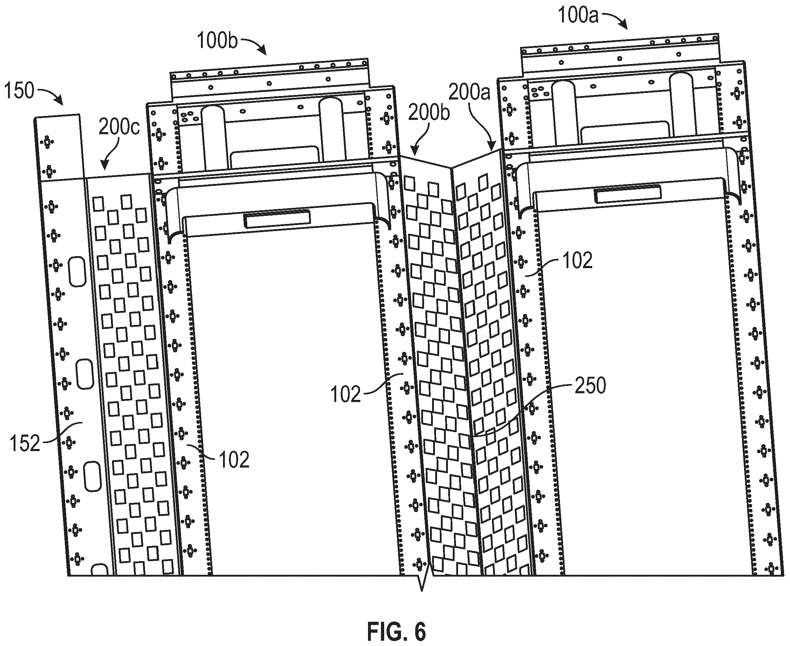

FIG. 6 is a perspective view of the brackets 200a, 200b, 200c mounted in various ways to racks 100a, 100b, mounted to each other, and mounted to a cabinet wall 150. In some embodiments, the bracket 200 can be dimensioned to fit entirely between two racks 100a, 100b. In some embodiments, two brackets 200a, 200b can be mounted between the adjacent racks 100a, 100b in the manner shown in FIG. 6. The flange 216 of the first bracket 200a can be mounted to the vertical rail 102 of the second rack 100a, the flange 214 of the second bracket 200b can be mounted to the vertical rail 102 of the second rack 100b, and the flange 214 of the first bracket 200a and the flange 216 of the second bracket 200b can be coupled to each other. In some embodiments, mounting of one or more brackets 200a, 200b between the racks 100a, 100b can provide additional strength and stability to the overall data center structure.

In some embodiments, the brackets 200a, 200b can be mounted in a substantially planar manner relative to the front plane of the racks 100a, 100b. In some embodiments, the brackets 200a, 200b can be mounted in an angled manner, e.g., the connection between the brackets 200a, 200b angled inwardly or angled outwardly relative to the front plane of the racks 100a, 100b. In some embodiments, the angled mounting of the brackets 200a, 200b can be used to direct cabling towards the supported active equipment inside the rack 100a, 100b "U" space between their respective vertical rails 102.

In some embodiments, the bracket 200c can be mounted between a rack 100b and a cabinet wall 150 (e.g., if the rack 100b is the first or last rack in a row of the data center). In such embodiments, the flange 216 of the bracket 200c can be mounted to the vertical rail 102 of the rack 100b, and the flange 214 of the bracket 200c can be mounted to the vertical rail 152 of the cabinet wall 150. The bracket 200c thereby extends substantially parallel to the front plane of the rack 100b and cabinet wall 150.

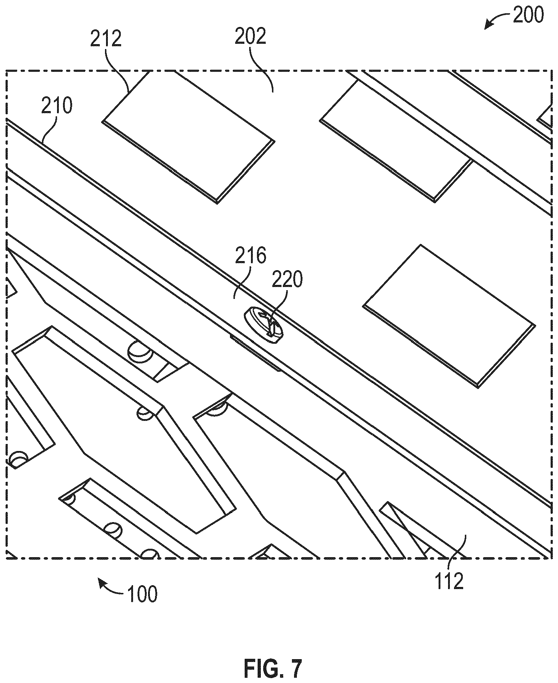

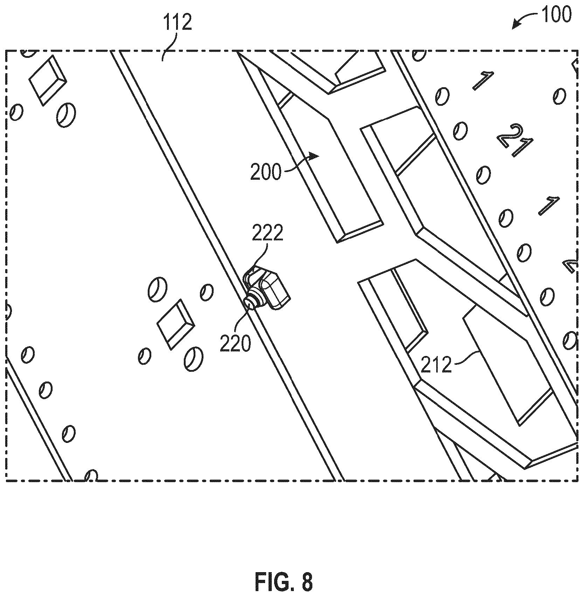

FIGS. 7-8 are detailed views of a bracket 200 mounted to a rack 100. The holes 218 in the flange 216 (and similarly flange 214) of the bracket 200 can be aligned with the holes 114 of the rack 100, and a fastener 220 can be passed through the aligned holes 114, 218 (obscured from view in FIGS. 7-8 by fastener 220 and nut 222). At the opposing end, a nut 222 can be used to secure the fastener 220 in place, thereby coupling the bracket 200 to the rack 100. The brackets 200 can be similarly coupled to each other, and similarly coupled to the cabinet wall 150. A variety of mounting options are therefore permitted with the bracket 200, allowing for customization based on the needs of the user.

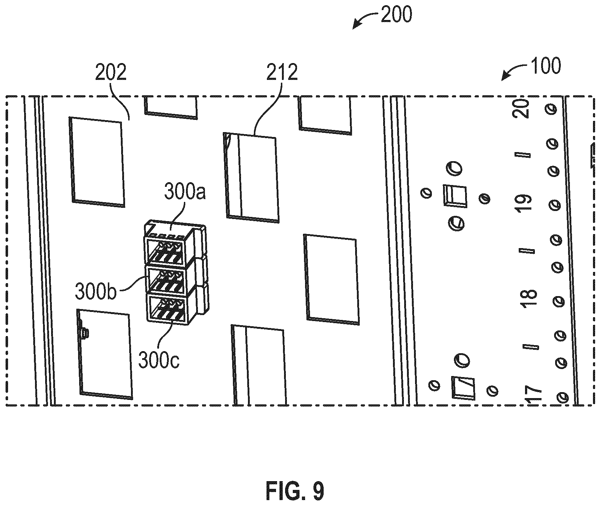

FIG. 9 is a perspective view of one implementation of the bracket 200. Each opening 212 in the bracket 200 can be dimensioned to receive one or more fiber optic adapters 300a, 300b, 300c via, e.g., a snap fit. In some embodiments, openings 212 might have threaded holes adjacent to them to enable screw mounting of fiber optic adapters. The blank space around the openings 212 can be used for labeling of the ports represented by adapters 300a, 300b, 300c and/or the optical fibers connected thereto. In some embodiments, the openings 212 could be dimensioned to support, e.g., OFP panels of varying density, enabling similar patch field density. Use of the brackets 200 allows patch cords to be short and routed horizontally, which greatly simplifies the front-side cable management in a data center by eliminating the need for vertical cable management and slack storage.

While exemplary embodiments have been described herein, it is expressly noted that these embodiments should not be construed as limiting, but rather that additions and modifications to what is expressly described herein also are included within the scope of the invention. Moreover, it is to be understood that the features of the various embodiments described herein are not mutually exclusive and can exist in various combinations and permutations, even if such combinations or permutations are not made express herein, without departing from the spirit and scope of the invention.

## Claims

1. A patch field mounting bracket, comprising:
a main body section defining a length between opposing top and bottom edges, and defining a width between opposing first and second side edges;
a first mounting flange extending from the first side edge of the main body section;
a second mounting flange extending from the second side edge of the main body section; and
openings formed in the main body section.

2. The patch field mounting bracket of claim 1, wherein the main body section defines a rectangular configuration with the top and bottom edges extending parallel to each other, and the first and second side edges extending parallel to each other.

3. The patch field mounting bracket of claim 1, wherein the first and second mounting flanges extend perpendicularly from the respective first and second side edges of the main body section.

4. The patch field mounting bracket of claim 3, wherein the first and second mounting flanges extend parallel to each other.

5. The patch field mounting bracket of claim 1, wherein the first and second mounting flanges include holes configured to receive a fastener therethrough.

6. The patch field mounting bracket of claim 1, wherein each of the openings formed in the main body section is configured and dimensioned to receive at least one fiber optic adapter.

7. The patch field mounting bracket of claim 1, wherein the openings formed in the main body section define a staggered and spaced pattern.

8. The patch field mounting bracket of claim 7, wherein the staggered and spaced pattern includes alternating rows of offset openings where each opening is substantially aligned with another opening two rows above and/or below.

9. The patch field mounting bracket of claim 1, wherein the first and second mounting flanges are configured for detachable coupling to at least one of (i) a vertical rail of a rack, (ii) a vertical rail of a cabinet wall, or (iii) another patch field mounting bracket.

10. A patch field mounting bracket system, comprising:
a rack including vertical rails extending between a base and a top assembly; and
a patch field mounting bracket, the patch field mounting bracket including:
a main body section defining a length between opposing top and bottom edges, and defining a width between opposing first and second side edges;
a first mounting flange extending from the first side edge of the main body section;
a second mounting flange extending from the second side edge of the main body section; and
openings formed in the main body section.

11. The patch field mounting bracket system of claim 10, wherein:
the length of the main body section of the patch field mounting bracket is substantially equal to a length of the vertical rails of the rack; or
the length of the main body section of the patch field mounting bracket is dimensioned smaller than a length of the vertical rails of the rack.

12. The patch field mounting bracket system of claim 10, wherein:
each of the vertical rails includes holes for mounting of the patch field mounting bracket to the vertical rails; or
the main body section of the patch field mounting bracket defines a rectangular configuration with the top and bottom edges extending parallel to each other, and the first and second side edges extending parallel to each other.

13. The patch field mounting bracket system of claim 10, wherein:
the first and second mounting flanges of the patch field mounting bracket extend perpendicularly from the respective first and second side edges of the main body section; and
the first and second mounting flanges of the patch field mounting bracket extend parallel to each other.

14. The patch field mounting bracket system of claim 10, wherein:
the first and second mounting flanges of the patch field mounting bracket include holes configured to receive a fastener therethrough for attachment of the patch field mounting bracket to the vertical rails of the rack; or
each of the openings formed in the main body section of the patch field mounting bracket is configured and dimensioned to receive at least one fiber optic adapter; or
the openings formed in the main body section of the patch field mounting define a staggered and spaced pattern including back-and-forth alternating rows of offset openings.

15. A method of patch field mounting, the method comprising:
mounting a patch field mounting bracket to a vertical rail of a rack, wherein the patch field mounting bracket includes (i) a main body section defining a length between opposing top and bottom edges, and defining a width between opposing first and second side edges, (ii) a first mounting flange extending from the first side edge of the main body section, (iii) a second mounting flange extending from the second side edge of the main body section, and (iv) openings formed in the main body section; and
engaging at least one fiber optic adapter with one of the openings formed in the main body section;
wherein the first mounting flange or the second mounting flange are configured for coupling to the vertical rail of the rack to mount the patch field mounting bracket to the vertical rail of the rack.
